**Europäisches Patentamt**

**European Patent Office**

**Office européen des brevets**

(11) Veröffentlichungsnummer: **0 240 647 B1**

# (12) EUROPÄISCHE PATENTSCHRIFT

(45) Veröffentlichungstag der Patentschrift: **14.08.91**

(51) Int. Cl.⁵: **A61C 9/00**

(21) Anmeldenummer: **86810149.4**

(22) Anmeldetag: **27.03.86**

(54) Verfahren zur Herstellung von Zahn- und Kiefermodellen sowie Mittel zur Durchführung des Verfahrens.

(43) Veröffentlichungstag der Anmeldung:
**14.10.87 Patentblatt 87/42**

(45) Bekanntmachung des Hinweises auf die Patenterteilung:
**14.08.91 Patentblatt 91/33**

(84) Benannte Vertragsstaaten:
**CH DE FR GB IT LI**

(56) Entgegenhaltungen:
**EP-A- 0 126 850**
**GB-A- 866 118**
**GB-A- 2 092 058**

(73) Patentinhaber: **Nordin, Harald E.**
**Villa Amphion**
**CH-1822 Chernex(CH)**

(72) Erfinder: **Nordin, Harald E.**
**Villa Amphion**
**CH-1822 Chernex(CH)**

(74) Vertreter: **Seehof, Michel et al**
**c/o AMMANN PATENTANWAELTE AG BERN**
**Schwarztorstrasse 31**
**CH-3001 Bern(CH)**

Rank Xerox (UK) Business Services

## Beschreibung

Die vorliegende Erfindung bezieht sich auf ein Verfahren zur Herstellung von Zahn- und Kiefermodellen, die aus einem Sockel und aus entfernbaren Zahn- oder Gussformsektionen bestehen, die mittels Stifte in passende Löcher im Sockel entfernbar befestigt sind, sowie auf einen Stift zur Durchführung des Verfahrens.

Ein Verfahren nach dem ersten Teil von Anspruch 1 sowie ein Stift nach dem ersten Teil von Anspruch 2 sind insbesondere aus der GB-A-2 092 058 bekannt.

Aus der deutschen Patentschrift 21 25 927 ist das oben beschriebene Verfahren bekannt, wobei einerseits für jede Sektion mindestens zwei Stifte verwendet werden und andererseits keine Mittel vorgesehen sind, um die einzelnen Zahnsektionen leicht vom Sockel lösen zu können. Das Verwenden von zwei Stiften brachte am damaligen Anmeldetag gemäss dieser Patentschrift gewisse Vorteile gegenüber dem damals vorbekannten Stand der Technik, indem eine genauere Führung und ein exakteres Einsetzen der Zahnsektionen erzielt wurde, wobei ausserdem für jeden Stift eine Buchse verwendet wurde. Abgesehen vom relativ grossen Materialaufwand für zwei Stifte und zwei Buchsen, ist eine genaue und parallele Führung der jeweils zwei Bohrungen notwendig.

Die GB-A-866 118 bezieht sich auf eine Vorrichtung zur unverdrehbaren und auswechselbaren Anbringung eines Tragstiftes für Einzelzahnersatz in einem Arbeitsmodell und offenbart einzelne Zahnersatzteile, die mit einem einzigen Stift entfernbar im Arbeitsmodell befestigt sind. Sämtliche dargestellten Stifte sind konisch, weisen jedoch einen von der kreisrunden Form abweichenden Querschnitt auf, beispielsweise einen quaderförmigen, dreieckigen oder mehreckigen Querschnitt. Die Verwendung von solchen Querschnitten bewirkt eine Drehsicherung, doch besteht bei der Verwendung von sich verjüngenden Stiften die Gefahr, dass sich Gipsteile oder dergleichen zwischen den beiden konischen Flächen befinden, wodurch die Genauigkeit und der Sitz stark beeinträchtigt werden können. Ausserdem benötigt auch diese Befestigungsart eine Buchse.

Gerade beim erstmaligen Herausziehen einer Zahnsektion aus dem Sockel kann es Schwierigkeiten geben und zu einem grossen Kraftaufwand führen. Zur Lösung dieses Problems schlägt die US-A-3,498,580 vor, im Sockel fensterartige Oeffnungen Anzubringen, durch welche ein Werkzeug einsteckbar ist, um die einzelnen Zahnsektionen herauszuheben. Dies bedingt eine zusätzliche Komplikation bei der Herstellung des Sockels und des Modells, sowie eine Schwächung des Sockels.

Es ist demgegenüber Aufgabe der vorliegenden Erfindung, ein Verfahren und ein Mittel zur Durchführung des Verfahrens anzugeben, mit welchem Zahn- und Kiefermodelle auf vereinfachte Art und Weise hergestellt werden können, in welchen die einzelnen Zahnsektionen einerseits drehsicher und genau und andererseits leicht abnehmbar befestigt sind. Ein Verfahren und ein Mittel zur Durchführung des Verfahrens, die diese Aufgabe lösen, sind in den Patentansprüchen beschrieben.

Die Erfindung wird im folgenden anhand einer Zeichnung von Ausführungsbeispielen näher erläutert.

| | |
|---|---|
| Fig. 1 | zeigt teilweise im Schnitt ein fertig gegossenes Zahnmodell in der Gussform, |
| Fig. 2 | zeigt das unterteilte Zahnmodell gemäss Fig. 1 von oben und auf dem Sockel montiert, |
| Fig. 3 | zeigt den Sockel von unten, |
| Fig. 4 | zeigt einen Schnitt in grösserem Massstab, |
| Fig. 5 und 6 | zeigen zwei Ausführungsbeispiele eines Befestigungsstiftes von oben. |

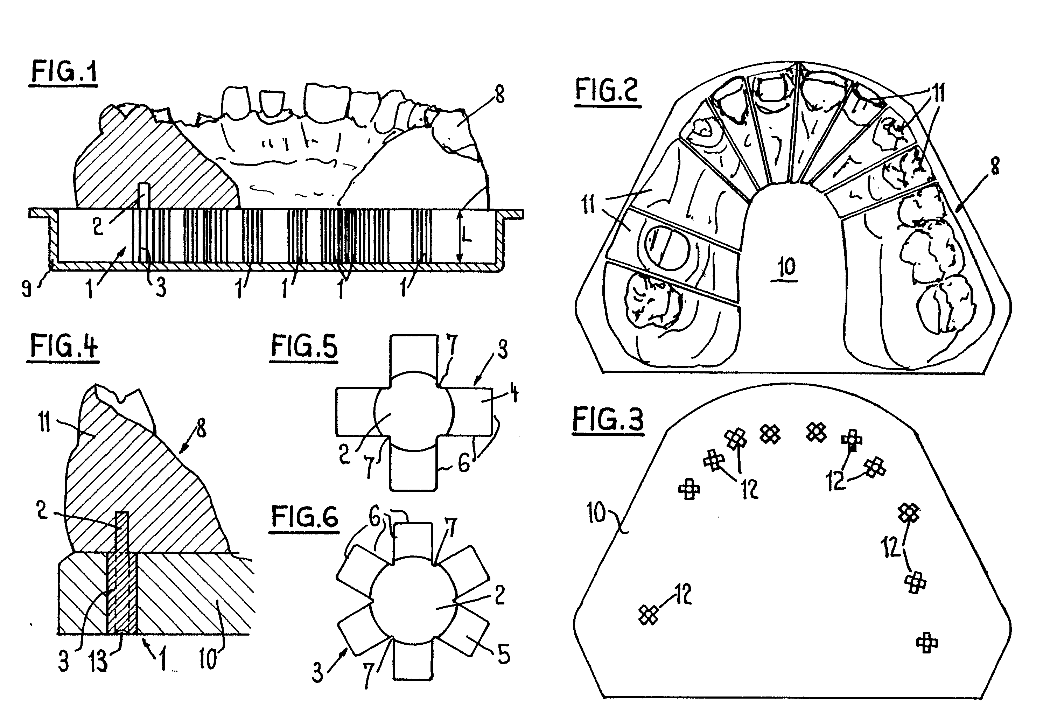

Wie weiter unten erläutert werden wird, beruht die vereinfachte Herstellung bei Erhaltung der Drehsicherung und der Genauigkeit auf die Verwendung eines einzigen Stiftes für jede Zahn- oder Guss-Sektion und das erleichterte Abheben der Zahnsektionen vom Sockel auf die Tatsache, dass der Stift den Sockel durchquert, wobei sich diese Bedingung sehr leicht durch die Verwendung einer geeigneten Gussform erfüllen lässt. Der in Figur 1 oder 4 und 5 dargestellte Stift 1 weist ein zylindrisches Oberteil 2 und ein profiliertes Steckteil 3 auf. Dieses profilierte Steckteil 3 kann, wie in Fig. 5 und 6 dargestellt, ein kreuzförmiges Profil 4 oder ein sternförmiges Profil 5 aufweisen. Sowohl das kreuz- als auch das sternförmige Profil bewirkt eine vollständige Drehsicherung, so dass es nicht notwendig ist, zwei Stifte pro Zahnsektion zu verwenden. Die Kanten 6 des kreuz-oder sternförmigen Profils sind parallel zueinander angeordnet. Dies hat den Vorteil, dass in den Löchern sich befindliche Staub- oder Gipspartikel herausgestossen werden und somit diese den Sitz oder die Genauigkeit nicht beeinträchtigen können. Selbstverständlich können auch andere Querschnitte als die angegebenen verwendet werden, beispielsweise dreieckige oder natürlich auch sternförmige Profile mit mehr Kanten als in Fig. 6 angegeben. Zweckmässigerweise weist der zylindrische Oberteil des Stiftes Rillen 7 auf, um eine bessere Haftung im Kieferabdruckpositif zu erzielen. Als Material kann ein geeignetes Metall, beispielsweise Messing verwendet werden.

Bei der Herstellung des Zahnmodells gemäss Fig. 1 wird zuerst das Kieferabdruckpositiv 8 erstellt und dessen Basis plangeschliffen, woraufhin die einzelnen Sektionen aufgezeichnet werden. Anschliessend wird in jede Sektion ein Loch gebohrt und die Stifte an ihren zylindrischen Oberteilen 2 mittels eines Klebers, beispielsweise ein Cyanacrylat eingeklebt. Danach wird das Positiv 8 mit den Stiften 1 in eine Gussform 9 gestellt, deren lichte Höhe der Länge L des profilierten Steckteils 3 entspricht. Anschliessend wird der Sockel 10 aus Gips gegossen, und zuletzt werden die einzelnen Sektionen 11 aufgeschnitten. Vor dem Giessen wird Sorge getragen, dass eine leichte Trennung zwischen dem Kieferabdruck-Positiv 8 und der Gußform 9 einerseits und den Stiften 1 und dem Sockel 10 andererseits erfolgen kann, beispielsweise durch Anbringen geeigneter und bekannter Trennschichten. Dadurch, dass die lichte Höhe der Gussform der Länge des Steckteils entspricht, sind die unteren Enden 12 der Steckteile bereits freigelegt oder können sehr leicht freigelegt werden, da höchstens eine sehr dünne Schicht darüber liegen kann. Daher können die einzelnen Sektionen durch Druck auf die Stiftenden sehr leicht abgehoben werden. Um die Verwendung einer Spitze zu erleichtern ist es vorteilhaft, am Stiftende 12 eine Einbuchtung 13 anzubringen, siehe insbesondere Fig. 4.

Wie aus der vorhergehenden Beschreibung hervorgeht, ist es nicht notwendig, Buchsen im Sockel anzubringen, da durch die Ausgestaltung des Steckteils und seiner guten Führung infolge der parallelen Kanten durch den Sockel hindurch eine übermässige Abnutzung der Oeffnung im Sockel und dadurch ein Verlust an Genauigkeit nicht zu befürchten ist. Dies ist eine weitere Massnahme zur Vereinfachung der Herstellung von Zahn- und Kiefermodellen, abgesehen von der Materialersparnis.

Ausserdem und nicht zuletzt ist hervorzuheben, dass durch das einfache Hineinstellen der zu vergiessenden Form in die Gussform die Ausrichtung der Steckteile der Stifte keine Rolle spielt, was eine weitere erhebliche Vereinfachung bedeutet.

**Patentansprüche**

1. Verfahren zur Herstellung von Zahn- und Kiefermodellen, die aus einem Sockel und aus entfernbaren Zahn-oder Gussform-Sektionen (11) bestehen, die mittels Stiften (1) in passende Löcher im Sockel (10) entfernbar befestigt sind, dadurch gekennzeichnet, dass nach der Herstellung des Kieferabdruckpositivs (8) von dessen Basis aus für jede Sektion (11) ein Loch gebohrt und darin das Oberteil (2) eines Stiftes (1) eingeklebt wird, dessen herausragender Teil (3) sich durch den Sockel (10) erstreckt und einen von der kreisrunden Form abweichenden Querschnitt (4, 5) und parallele Kanten (6) aufweist, und dass anschliessend das Kieferabdruckpositiv mit den Stiften in eine Sockel-Gussform (9), deren lichte Höhe der Länge (L) des herausragenden Teils (3) des Stiftes entspricht, gestellt und die Sockel-Gussform mit einer Gipsmasse gefüllt wird, derart, dass die einzelnen Sektionen nach dem Durchtrennen drehsicher und entfernbar im Sockel befestigt sind und leicht an den an der Unterseite des Sockels sichtbaren Enden (12) der herausragenden Teile der Stifte herausdrückbar sind.

2. Stift zur Durchführung des Verfahrens nach Anspruch 1, welcher ein zylindrisches Oberteil (2) aufweist, dadurch gekennzeichnet, dass er ein profiliertes Steckteil (3) aufweist, das einen von der kreisrunden Form abweichenden Querschnitt (4, 5) und parallele Kanten (6) hat.

3. Stift nach Anspruch 2, dadurch gekennzeichnet, dass der Querschnitt des Steckteils (3) kreuzförmig (4), sternförmig (5) oder dreieckig ist.

4. Stift nach Anspruch 2 oder 3, dadurch gekennzeichnet, dass das Ende (12) des Steckteils eine Einbuchtung (13) aufweist.

5. Stift nach einem der Ansprüche 2 bis 4, dadurch gekennzeichnet, dass das Oberteil (2) Rillen (7) aufweist.

**Claims**

1. A method for the manufacture of tooth and jaw models consisting of a base and of removable tooth or casting mold sections (11) which are removably secured in matching holes of said base (10) by means of pins (1), characterized in that after the manufacture of the jaw replica positive (8), a hole is drilled for each section (11) from the side of its foot and the upper portion (2) of a pin (1) is cemented therein, the projecting portion (3) of said pin extending through the base (10) and having a non-circular cross-section (4,5) as well as parallel edges (6), and in that the jaw replica positive including the pins is subsequently placed in a casting mold (9) for the base, the clear height of which corresponds to the length (L) of the projecting portion (3) of the pins and said base casting mold is filled with a gypsum composition in such a manner that after their separation, the individual sections are non-rotatively and removably secured in the base and may easily be pushed out by the ends (12) of the projecting portions of the pins, which are visible on the underside of the base.

2. A pin for implementing the method of claim 1, comprising a cylindrical upper portion (2), characterized in that it is provided with a profiled plug portion (3) having a non-circular cross-section (4,5) and parallel edges.

3. A pin according to claim 2, characterized in that the cross-section of the plug portion (3) is cross-shaped (4), star-shaped (5) or triangular.

4. A pin according to claim 2 or 3, characterized in that the end (12) of the plug portion is provided with a recess (13).

5. A pin according to any one of claims 2 to 4, characterized in that the upper portion (2) is provided with grooves (7).

**Revendications**

1. Procédé pour la fabrication de modèles dentaires et maxillaires, comprenant un socle et des sections (11) de la dentition ou du moule amovibles qui sont attachées de manière amovible au moyen de chevilles (1) dans des trous appropriés du socle (10), caractérisé en ce qu'après la fabrication de la réplique dentaire positive, un trou est percé pour chaque section (11) du côté de sa base, et la partie supérieure d'une cheville (1) y est collée, la partie en saillie (3) de ladite cheville s'étendant à travers le socle (10) et présentant une coupe transversale (4,5) non circulaire et des arêtes parallèles (6), et que la réplique dentaire positive est ensuite posée avec les chevilles dans un moule (9) pour le socle dont la hauteur libre correspond à la longueur (L) de la partie en saillie (3) des chevilles, et que le moule pour le socle est rempli d'une composition de plâtre, de sorte qu'après leur séparation, les sections individuelles sont attachées au socle non-rotativement et de manière amovible et sont facilement dégagées par les extrémités des parties en saillie des chevilles, visibles au bas du socle.

2. Cheville pour la mise en oeuvre du procédé selon la revendication 1, comprenant une partie supérieure (2) cylindrique, caractérisée en ce qu'elle comporte une partie enfichable (3) présentant une coupe transversale (4,5) non circulaire et des arêtes parallèles.

3. Cheville selon la revendication 2, caractérisée en ce que la coupe transversale de la partie enfichable (3) est en forme de croix (4), d'étoile (5) ou triangulaire.

4. Cheville selon la revendication 2 ou 3, caractérisée en ce que l'extrémité (12) de la partie enfichable présente un évidement.

5. Cheville selon l'une quelconque des revendications 2 à 4, caractérisée en ce que la partie supérieure (2) présente des rainures.

FIG.1

FIG.2

FIG.4

FIG.5

FIG.6

FIG.3

EP 0 240 647 B1